# FASCICULE DE BREVET EUROPEEN

(11) **EP 1 037 018 B1**
(45) Date de publication et mention de la délivrance du brevet: **27.02.2013**
(21) Numéro de dépôt: 00810164.4
(22) Date de dépôt: 29.02.2000
(51) Int. Cl.: G01D 5/20, G01N 27/90

(54) **Capteur inductif**
Induktiver Sensor
Inductive sensor

(30) Priorité: 11.03.1999 CH 45199
(43) Date de publication de la demande: 20.09.2000
(73) Titulaire: POSIC SA, 2000 Neuchatel (CH)
(72) Inventeur: de Coulon, Yves, 2075 Thielle-Wavre (CH)
(74) Mandataire: P&TS SA (AG, Ltd.)

(56) Documents cités:
- EP-A- 0 871 012
- US-A- 5 510 709
- PATENT ABSTRACTS OF JAPAN vol. 1997, no. 04, 30 avril 1997 (1997-04-30) & JP 08 334498 A (ISHIKAWAJIMA HARIMA HEAVY IND CO LTD), 17 décembre 1996 (1996-12-17)

## Description

L'invention concerne les capteurs inductifs du type planaire qui permettent de détecter les discontinuités d'une pièce (ou cible) conductrice ou ferromagnétique sans contact avec cette dernière. Les capteurs à induction magnétique du type planaire sont connus et sont par exemple décrits dans les demandes européennes de brevets N0. 97 106 884.6 et N0. 98 400 835.9. Un tel capteur inductif miniaturisé comprend au moins un enroulement primaire parcouru par un courant alternatif qui engendre un champ magnétique alternatif et au moins un enroulement secondaire soumis à ce champ alternatif, les enroulements étant planaires. L'amplitude et la phase du flux magnétique traversant chaque enroulement secondaire sont modifiées par le passage d'une pièce (ou cible) métallique ou ferromagnétique comportant au moins une discontinuité, de telle sorte qu'en mesurant la modulation d'amplitude ou de phase des tensions électriques induites dans les enroulements secondaires, on détecte le passage de cette discontinuité, ce qui permet, par un traitement adapté des signaux représentant ces tensions, de déterminer le type de discontinuité, le sens et la vitesse du mouvement de la pièce métallique.

De tels capteurs sont utilisés dans de nombreux domaines et, notamment dans le domaine des automobiles, pour détecter la vitesse de rotation de l'arbre moteur ou des roues par l'intermédiaire d'une roue dentée par exemple dont les dents défilent devant le capteur inductif, ce qui crée des variations de la tension induite dans les enroulements secondaires lors du passage des flancs des dents. L'amplitude des variations dépend fortement de la position et de l'orientation du capteur par rapport à la cible. Ainsi donc, la géométrie des bobines et le montage du capteur sont adaptés à la forme des dents, ou marques, de la cible.

Dans la plupart des applications, le capteur inductif doit être disposé avec précision par rapport à la cible de manière à obtenir un signal électrique satisfaisant, par exemple, avec un rapport Signal/Bruit aussi élevé que possible pour assurer une bonne détection même en présence de bruit introduit par les éléments utilisés pour le traitement du signal. Une telle mise en place précise du capteur vis-à-vis de la cible est parfois difficile à réaliser, ou son maintien en position au cours du temps peut ne pas toujours être assuré et le réglage initial s'en trouve alors modifié.

Un but de la présente invention est donc de réaliser un capteur inductif qui permette d'optimiser le rapport Signal/Bruit, même en cas de positionnement non optimal du capteur par rapport à la cible.

Un autre but de la présente invention est aussi de réaliser un capteur inductif dont la mise en place par rapport à la cible est plus simple,plus rapide, plus fiable et ainsi moins onéreuse.

Encore un autre but de l'invention est de permettre l'utilisation d'un grand nombre de bobines réceptrices dont les signaux de sortie sont traités de manière globale de manière à permettre d'obtenir une information, par exemple, sur la forme de la discontinuité de la cible (image magnétique), la position ou le mouvement d'une forme prédéterminée.

L'invention concerne donc un capteur inductif optimisé du type comportant un enroulement primaire, alimenté par un courant alternatif fourni par un dispositif d'excitation et des enroulements secondaires multiples soumis au champ magnétique créé par l'enroulement primaire et fournissant sur leurs bornes de sortie des signaux électriques représentatifs des variations du champ magnétique dues à la présence d'une cible avec des discontinuités, lesdits signaux électriques étant appliqués à un circuit d'amplification-démodulation suivi d'un circuit de traitement des signaux démodulés, caractérisé en ce que :
- les enroulements secondaires ont des dimensions minimales compatibles avec la détection des signaux induits par les variations du champ magnétique, de manière à pouvoir associer, à un enroulement primaire excitateur, un nombre maximal d'enroulements secondaires entre deux discontinuités de la cible, et
- les bornes de sortie des enroulements secondaires sont connectées à des moyens d'interconnexion qui réalise la connexion adaptative desdites bornes de sortie de manière à connecter les enroulements secondaires en fonction des discontinuités de la cible.

Le capteur optimisé de l'invention peut avantageusement être associé à un circuit électronique d'interface permettant d'exécuter une ou plusieurs des fonctions suivantes:
- l'analyse locale, globale, ou selon des groupements donnés des signaux délivrés par les bobines secondaires;
- le groupement des signaux délivrés par les bobines selon une représentation définie;
- le groupement des signaux délivrés par les bobines selon une configuration déterminée par le circuit d'interface lui-même pour appliquer une fonction de transfert définie.

Dans le cas d'une adaptation aux marques de la cible, des couples d'enroulements secondaires sont groupés par lesdits moyens d'interconnexion pour obtenir des signaux dont le rapport Signal/Bruit est aussi bon que possible.

Les moyens d'interconnexion peuvent être réalisés par des éléments conducteurs galvaniques, par des interrupteurs électroniques dont l'ouverture et la fermeture sont obtenues par des signaux électriques fournis par un circuit d'adaptation. Les interconnexions peuvent également être déterminées par un processus d'autocalibration. Ils peuvent, par exemple, être réalisés au moyen de lignes de métal prédéfinies ou d'interrupteurs électroniques miniatures dont la fermeture dépend du regroupement désiré, ou de la fonction de transfert locale ou globale que l'on souhaite réaliser. De plus, il est possible d'ajouter une fonction de calcul et/ou de pondération sur tout ou partie des bobines réceptrices.

D'autres caractéristiques et avantages de la présente invention apparaîtront à la lecture de la description suivante d'un exemple particulier de réalisation, ladite description étant faite en relation avec les dessins joints dans lesquels :
- la figure 1 est un schéma fonctionnel d'un capteur inductif présentant des caractéristiques de la présente invention,
- la figure 2 est un schéma montrant une disposition particulière d'une pluralité d'enroulements secondaires par rapport aux dents d'une roue,
- la figure 3 est un schéma montrant un câblage des différents enroulements secondaires du capteur de la figure 2 dans un cas d'adaptation sur une cible de pas connu, et
- la figure 4 est un schéma montrant un exemple de réalisation d'une autocalibration du capteur inductif au pas d'une cible.

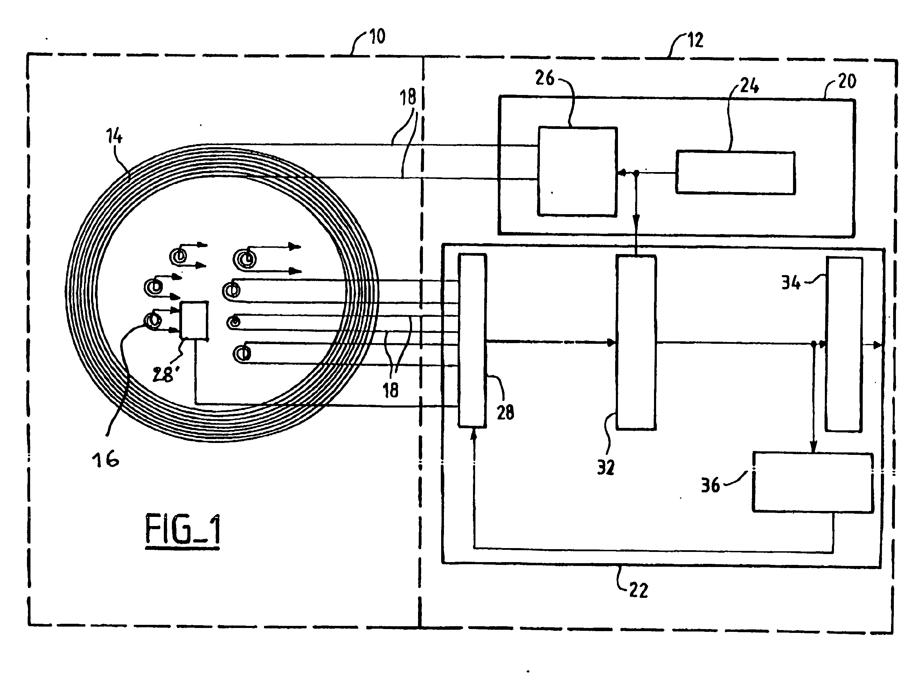

Un capteur inductif selon l'invention est représenté à la figure 1. Il se compose de deux parties; l'une, référencée 10, comprend les enroulements primaire 14 et secondaires 16 et l'autre, référencée 12, est constituée par un système de traitement des signaux électriques appliqués à l'enroulement primaire 14 et de ceux fournis par les enroulements secondaires 16.

Selon l'invention, à chaque enroulement primaire excitateur 14 est associée une pluralité d'enroulements secondaires récepteurs 16. Les bornes de sortie de l'enroulement primaire 14 et des enroulements secondaires 16 sont connectées au système de traitement 12 par l'intermédiaire de conducteurs 18. Le système de traitement 12 comprend un dispositif électronique d'excitation 20 qui fournit le signal électrique d'excitation de l'enroulement primaire ou bobine excitatrice 14 et un dispositif électronique 22 de traitement des signaux électriques apparaissant aux bornes de sortie des enroulements secondaires 16.

Le dispositif électronique d'excitation 20 comprend essentiellement un oscillateur 24 dont le signal alternatif est amplifié dans un amplificateur 26 avant d'être appliqué aux bornes de sortie de l'enroulement primaire 14.

Le dispositif électronique de traitement 22 comprend, selon l'invention :
- un circuit d'interconnexion 28 des bornes de sortie des enroulements secondaires 16 de manière à grouper les bobines réceptrices selon une représentation prédéfinie, une fonction de transfert désirée ou encore de manière à assurer le groupement le plus optimal possible, ce dernier pouvant être déterminé par des moyens d'autocalibration,
- un circuit de traitement local 28' des signaux délivrés par les bobines réceptrices permettant de réaliser un calcul ou une fonction de transfert donnés,
- un circuit d'amplification-démodulation 32 comprenant, par exemple, un amplificateur-démodulateur par groupement d'enroulements secondaires,
- un circuit d'adaptation 36 pour adapter l'interconnexion 28 en fonction du résultat du traitement effectué, et
- un circuit de traitement 34 des signaux démodulés.

Le circuit d'interconnexion 28 qui réalise le groupement optimal des enroulements secondaires pour obtenir une représentation choisie peut être réalisé directement sur le substrat qui supporte les enroulements secondaires, comme cela a été décrit dans les demandes de brevets précitées. Dans le cas général, tel que représenté à la figure 1, le circuit d'interconnexion 28 permet de connecter en série un groupement quelconque de bobines réceptrices de manière à ce que ce groupement corresponde à la configuration désirée. Cette dernière peut être fixe et le circuit d'interconnexion 28 est alors constitué de simples connexions, assurant la mise en série des bobines réceptrices appartenant audit groupement. Elle peut, également, être modifiable et, dans ce cas, le circuit d'interconnexion se présentera, avantageusement, sous la forme d'une matrice de lignes et de colonnes avec des moyens d'interconnexion entre chaque ligne et chaque colonne; chaque ligne étant, par ailleurs, reliée à une première borne d'une bobine réceptrice et chaque colonne étant reliée à une deuxième borne d'une bobine réceptrice. Les moyens d'interconnexion peuvent être de tout type connu, tels des mini-interrupteurs électroniques, des connexions fusibles, etc. Il devient alors possible de réaliser toute forme de groupement des bobines réceptrices pour assurer la fonction désirée. L'établissement d'une connexion entre une ligne et une colonne de la matrice est contrôlée par le circuit d'adaptation 36, dont le rôle et la fonction seront explicités dans la suite de la description.

Le circuit d'interconnexion 28 a été disposé avant le circuit d'amplification-démodulation 32 mais il peut être aussi disposé après le circuit d'amplification-démodulation 32.

Le circuit de traitement 34 peut être de tout type connu, par exemple du type utilisé dans le traitement d'images optiques, souvent appelé ^{"}rétine artificielle", pour détecter le contour, la position, le mouvement, l'orientation et la vitesse d'objets. Le circuit 34 peut, par exemple, extraire le contour d'une marque (ou dent) de la cible et adapter la configuration, par l'intermédiaire du circuit 28, des bobines réceptrices de manière qu'elle corresponde à ce contour. On pourra, notamment, se référer à l'article de P. Venier et al intitulé "An Integrated Cortical Layer for Orientation Enhancement" et paru dans IEEE Jounal of Solid-State Circuits, Vol. 32, N0. 2, February 1997. Pour effectuer l'opération de démodulation dans le circuit d'amplification-démodulation 32, ce dernier reçoit le signal électrique de l'oscillateur 24 du dispositif d'excitation 20 qui sert de signal de référence aux démodulateurs.

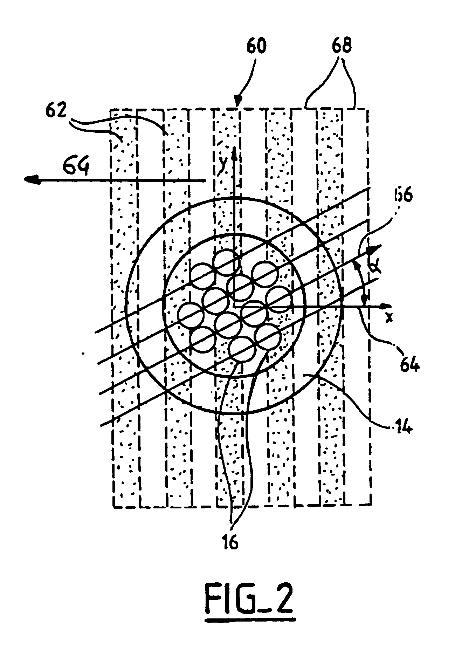

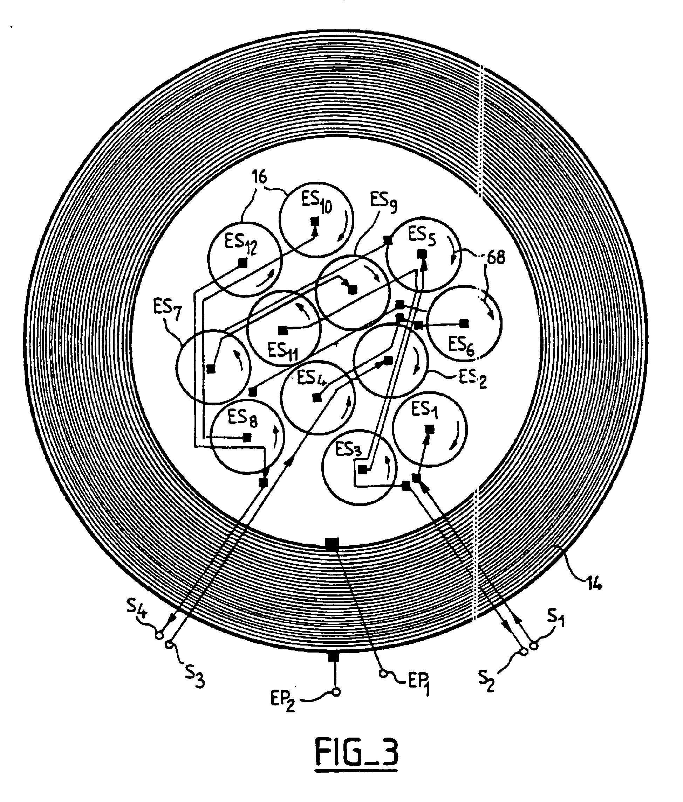

La figure 2 est un schéma qui montre les positions des enroulements secondaires d'un capteur inductif par rapport aux dents verticales d'une cible tandis que la figure 3 est un schéma qui montre un exemple de réalisation d'un circuit de câblage entre les couples d'enroulements secondaires tels que définis par le schéma de la figure 2.

Les figures 2 et 3 montrent un exemple d'interconnexion des bobines réceptrices satisfaisant une configuration prédéfinie. L'enroulement primaire excitateur 14 est associé à douze enroulements secondaires récepteurs 16, référencés ESI à ES12 sur la figure 3, et le tout est placé à proximité d'une roue dentée 60 comprenant des dents 62 de pas égal à T. Les enroulements secondaires ont un diamètre extérieur L qui est supérieur à T/2, ce qui a pour conséquence que les enroulements secondaires ne peuvent être alignés, selon la direction de déplacement 64 des dents et pour un signal différentiel maximum, que selon une direction 66 faisant un angle α avec la direction 64 tel que tg α = 1/2.

Les douze enroulements secondaires doivent être groupés deux à deux, c'est-à-dire couplés, de manière que les flancs qu'ils détectent soient de sens opposés, c'est-à-dire un enroulement doit être en concordance avec une transition dans le sens dent-creux tandis que l'autre est en concordance avec une transition dans le sens creux-dent.

En outre, les signaux différentiels provenant de couples d'enroulements secondaires qui correspondent au même type de transition sont additionnés pour augmenter le signal. C'est ainsi que les signaux des couples (ES,, ES₃), (ES₅, ES₇) et (ES₉, ES₁₁) sont additionnés par un câblage approprié pour obtenir un signal somme entre les bornes de sortie S₂ et S,, tandis que les signaux des couples (ES₂, ES₄), (ES₆, ES₈) et (ES₁₀, ES₁₂) sont additionnés par un câblage approprié pour obtenir un signal somme entre les bornes de sortie S4 et S₃.

Sur la figure 3, les bornes EP₁ et EP₂ sont les bornes de sortie de l'enroulement primaire 14 et les flèches 68 indiquent le sens de chaque enroulement secondaire. Dans le dispositif qui vient d'être décrit en relation avec les figures 2 et 3, le circuit d'interconnexion 30 a été réalisé directement sur le substrat au voisinage immédiat des enroulements secondaires ES1 à ES12 en fonction du pas T des dents de la roue 60, du diamètre L des enroulements secondaires et du nombre d'enroulements secondaires. Ceci correspond à une adaptation "manuelle" 36 selon le problème à résoudre.

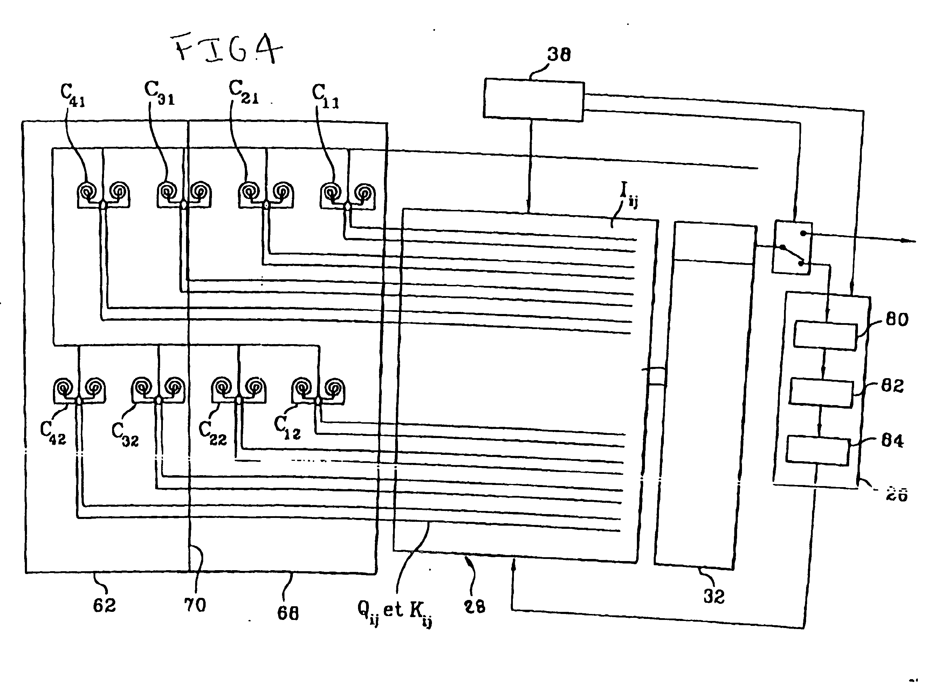

Le dispositif qui est décrit en relation avec la figure 4 correspond à une adaptation "automatique" du capteur à une configuration différentielle et au pas de la cible. Sur cette figure 4, on n'a représenté schématiquement que la partie réceptrice disposée devant une seule dent 62 suivie d'un trou 68; la dent et le trou étant séparés par un flanc 70 qui constitue une ligne de discontinuité magnétique.

Les enroulements secondaires d'un couple différentiel sont disposés côte à côte et les couples sont répertoriés sous une forme matricielle, chaque couple étant alors référencé Cij. Les 4 couples de la deuxième ligne j = 2 sont décalés par rapport à ceux de la première ligne j = 1. Les bornes de sortie des couples Cij sont connectées à la matrice d'interconnexion 28 dont les bornes de sortie sont connectées au circuit d'amplification-démodulation 32.

Le circuit d'adaptation 26 comprend un comparateur 80 et deux mémoires matricielles 82 et 84.

La matrice d'interconnexion 28 comprend une série de paires d'interrupteurs Iij, une paire par couple Cij, de manière à connecter sélectivement un couple au circuit amplificateur-démodulateur correspondant. Elle comprend également d'autres interrupteurs, référencés Qij et Kij, qui sont prévus pour réaliser l'interconnexion entre les différents couples de manière à les grouper selon le résultat de l'autocalibration.

L'autocalibration est réalisée par la commande des interrupteurs lij, lorsque la cible est immobile, de manière à mesurer le signal de sortie de chaque couple Cij. Lorsque l'amplitude du signal est supérieure à un certain seuil, cela signifie que le couple est en concordance avec un flanc 70 (couple C₃₁) et ceci est mémorisé dans la mémoire 36 par le signe binaire 1. Tous les autres couples sont en dehors d'un flanc et les signaux détectés sont inférieurs au seuil ; ils sont mémorisés par un chiffre binaire 0. On obtient alors une matrice de 1 et de 0 qui pour le cas de la figure 4 est :
0100
0000

Une telle matrice signifie que le couple C₃₁ est en concordance avec le flanc 70, que les couples C₄₁, C₃₂ et C₄₂ sont devant une dent tandis que les couples C₁₁, C₂₁, C₁₂ et C₂₂ sont devant un creux. On en déduit alors qu'il faut additionner les signaux des couples devant une dent et soustraire les signaux des couples devant un creux et ceci est réalisé par les interrupteurs Qij et Kij, dont l'ouverture ou la fermeture sont commandées par les valeurs binaires p d'une matrice déduite de la précédente, soit:
1100
1100
p = 1 signifiant l'addition des signaux et p = 0 signifiant la soustraction des signaux.

La description ci-dessus montre que l'on peut définir les étapes d'un procédé d'autocalibration d'un capteur inductif consistant à :
(a) mesurer le signal de sortie de chaque couple d'enroulements secondaires Cij,
(b) comparer le signal mesuré à un seuil et lui donner la valeur binaire 1 ou 0 selon qu'il est supérieur ou inférieur audit seuil,
(c) affecter la valeur binaire 1 ou 0 aux éléments d'une première matrice représentative de la disposition des couples d'enroulements secondaires Cij,
(d) transformer cette première matrice en une seconde matrice représentative des groupements de couples d'enregistrements secondaires à effectuer selon la discontinuité à détecter, et
(e) élaborer, à partir de cette seconde matrice, des signaux de commande des interrupteurs des moyens d'interconnexion.

## Revendications

1. Capteur inductif optimisé comportant :
un enroulement primaire, alimenté par un courant alternatif fourni par un disposilif d'excitation,
des enroulements secondaires multiples soumis au champ magnétique créé par l'enroulement primaire et fournissant sur leurs bornes de sortie des signaux électriques représentatifs des variations du champ magnétique dues à la présence d'une cible avec des discontinuités, lesdits signaux électriques étant appliqués à un circuit d'amplification-démodulation suivi dun circuit de traitement des signaux démodulés,
**caractérisé en ce que**:
les bornes de sortie des enroulements secondaires sont connectées à des moyens d'interconnexion qui réalisent la connexion adaptative desdites bornes de sortie de manière à connecter les enroulements secondaires en fonction des discontinuités de la cible,
et **en ce que** les enroulements secondaires ont des dimensions minimales compatibles avec la détection des signaux induits par les variations du champ magnétique, de manière à pouvoir associer, à un enroulement primaire excitateur, un nombre maximal d'enroulements secondaires entre deux discontinuités de la cible.

2. Le capteur de la revendication 1, associé à un circuit électronique d'interface permettant d'exécuter une ou plusieurs des fonctions suivantes :
l'analyse locale, globale ou selon des groupements donnés des signaux délivrés par les bobines ou enroulements secondaires ;
le groupement des signaux délivrés par les bobines ou enroulements secondaires ;
le groupement des signaux délivrés par les bobines ou enroulements selon une configuration déterminée par le circuit d'interface pour appliquer une fonction de transfert définie.

3. Le capteur de l'une des revendications 1 à 2, dans lequel lesdits moyens d'interconnexion comprennent des interrupteurs commandés par des signaux électriques.

4. Le capteur de la revendication 3, dans lequel lesdits moyens d'interconnexion sont réalisés par des interrupteurs électroniques dont l'ouverture et la fermeture sont obtenues par des signaux électriques fournis par un circuit d'adaptation.

5. Le capteur de l'une des revendications 1 à 4, associé à des moyens d'autocalibration.

6. Le capteur de l'une des revendications 1 à 5, dans lequel lesdits moyens d'interconnexion mettent en oeuvre un circuit d'interconnexion (28) réalisé directement sur le substrat qui supporte lesdits enroulements secondaires.

## Claims

1. Optimised inductive sensor, comprising:
a primary winding powered by an alternating current supplied by an exciter device,
multiple secondary windings subjected to the magnetic field created by the primary winding and supplying on their output terminals electric signals representative of the variations of the magnetic field resulting from the presence of a target with discontinuities, said electric signals being applied to an amplification-demodulation circuit followed by a circuit for processing demodulated signals, **characterised in that**
the output terminals of the secondary windings are connected to interconnection means that execute the adaptive connection of said output terminals so as to connect the secondary windings according to the discontinuities of the target,
and **in that** the secondary windings have minimum dimensions compatible with detecting signals induced by the variations of the magnetic field, so as to be able to associate, with an exciter primary winding, a maximum number of secondary windings between two discontinuities of the target.

2. The sensor of claim 1, associated with an interface electronic circuit enabling one or several of the following functions to be executed:
analysis locally, globally or according to given groupings, of the signals supplied by the secondary coils or windings,
grouping of the signals supplied by the secondary coils or windings;
grouping of the signals supplied by the coils or windings according to a configuration determined by the interface circuit to apply a defined transfer function.

3. The sensor of one of the claims 1 to 2, wherein said interconnection means comprise switches controlled by electric signals.

4. The sensor of claim 3, wherein said interconnection means are executed by electronic switches whose opening and closing are achieved by electric signals supplied by an adaptation circuit.

5. The sensor of one of the claims 1 to 4, associated with self-calibration means.

6. The sensor of one of the claims 1 to 5, wherein said interconnection means implement an interconnection circuit (28) executed directly on the substrate that supports said secondary windings.

## Patentansprüche

1. Optimierter induktiver Sensor, mit:
einer primären Windung, welche mit einem durch eine Erregervorrichtung gelieferten Wechselstrom gespeist wird,
mehrfachen sekundären Windungen, welche dem durch die primäre Windung erzeugten magnetischen Feld ausgesetzt sind und welche an ihren Ausgangsklemmen elektrische Signale liefern, die die Variationen des magnetischen Feldes resultierend aus dem Vorhandensein eines Zielobjekts mit Diskontinuitäten wiederspiegeln, wobei die besagten elektrischen Signale an einer Verstärkung-Demodulationsschaltung und danach an einer Schaltung zur Verarbeitung von demodulierten Signalen angelegt werden,
**dadurch gekennzeichnet, dass**
die Ausgangsklemmen der sekundären Windungen mit Zusammenschaltungsmitteln verbunden sind, welche die adaptive Verbindung der besagten Ausgangsklemmen ausführen, um somit die sekundären Windungen gemäss den Diskontinuitäten des Zielobjekts zu verbinden,
und dass die sekundären Windungen minimale Dimensionen aufweisen, welche mit der Erkennung von durch die Variationen des magnetischen Feldes induzierten Signalen kompatibel sind, um somit eine maximale Anzahl von sekundären Windungen zwischen zwei Diskontinuitäten des Zielobjekts mit einer erregenden primären Windung verbinden zu können.

2. Der Sensor von Anspruch 1, mit einer elektronischen Schnittstellenschaltung, welche eine oder mehrere der folgenden Funktionen auszuführen vermag:
lokale, globale oder gruppengemässe Analyse der von den sekundären Spulen oder Windungen gelieferten Signale;
Gruppierung der von den sekundären Spulen oder Windungen gelieferten Signale;
Gruppierung der von den Spulen oder Windungen gelieferten Signale gemäss einer durch die Schnittstellenschaltung bestimmten Konfiguration, um eine definierte Transferfunktion auszuführen.

3. Der Sensor eines der Ansprüche 1 bis 2, worin die besagten Zusammenschaltungsmitteln Schaltungen aufweisen, welche durch elektrische Signale gesteuert werden.

4. Der Sensor von Anspruch 3, worin die besagten Zusammenschaltungsmitteln als elektronische Schaltungen ausgeführt sind, deren Öffnen und Schliessen durch von einer Anpassungsschaltung gelieferte elektrische Signale erreicht werden.

5. Der Sensor eines der Ansprüche 1 bis 4, der mit Selbstkalibrierungsmitteln verbunden ist.

6. Der Sensor eines der Ansprüche 1 bis 5, worin die besagten Zusammenschaltungsmitteln eine Verschaltung (28) einsetzen, welche direkt auf dem die besagten sekundären Windungen tragenden Substrat ausgeführt ist.
